# EUROPÄISCHE PATENTSCHRIFT

(11) **EP 1 293 309 B1**
(45) Veröffentlichungstag und Bekanntmachung des Hinweises auf die Patenterteilung: **30.06.2004**
(21) Anmeldenummer: 02020510.0
(22) Anmeldetag: 13.09.2002
(51) Int. Cl.: B25J 19/00, B25J 15/02

(54) **Handhabungsgerät, insbesondere zur Verwendung in Reinräumen**
Manipulating device, particularly for use in clean room environments
Dispositif de manipulation, spécialement adapter à l'usage en salle blanche

(30) Priorität: 14.09.2001 DE 10146196
(43) Veröffentlichungstag der Anmeldung: 19.03.2003
(73) Patentinhaber: Schunk GmbH & Co. KG Fabrik für Spann- und Greifwerkzeuge, 74348 Lauffen (DE)
(72) Erfinder: Schuster, Andreas, 71543 Wüstenrot/Neulautern (DE); Hoch, Andreas, 74388 Talheim (DE)
(74) Vertreter: Dreiss, Fuhlendorf, Steimle & Becker

(56) Entgegenhaltungen:
- EP-A- 0 438 030
- DE-A- 19 604 649
- US-A- 4 913 481
- US-A- 5 839 770

## Beschreibung

Die Erfindung betrifft ein Handbhabungsgerät, insbesondere zur Verwendung in Reinräumen, mit einem Grundkörper, mit einer im Grundkörper vorhandenen Aussparung zur Aufnahme wenigstens eines im Grundkörper verschieblich gelagerten Bewegungsgliedes und mit einem in dem Grundkörper angeordenten Antrieb, wobei das Bewegungsglied durch den Antrieb wenigstens abschnittweise aus dem Grundkörper herausführbar ist und wobei aufgrund der Verschiebung des Bewegungsgliedes der in dem Grundkörper für ein Gasvolumen zur Verfügung stehende Hohlraum sein Volumen ändert.

Solche Handhabungsgeräte, die allerdings nicht zur Verwendung in Reinräumen geeignet sind, sind beispielsweise aus der DE 196 04 649 C2 in Form von Greif- oder Spannvorrichtungen bekannt geworden. Der Antrieb der Handhabungsgeräte kann hierbei entweder pneumatisch, hydraulisch oder auch elektrisch erfolgen. Zwischen dem Antrieb und dem Bewegungsglied kann eine Getriebekinematik angeordnet sein. Die Handhabungsgeräte eignen sich zur Verwendung in Reinräumen deshalb nicht, da nicht gewährleistet wird, dass von ihnen keine Partikelemission ausgeht. Grundsätzlich tritt Verschleiß und Abrieb zwischen zwei sich gegeneinander bewegenden, einander berührenden Gegenständen auf. Aus dem Verschleiß bzw. dem Abrieb resultiert die unerwünschte Partikelemission. Handhabungsgeräte, die im Reinraum verwendet werden sollen, müssen deshalb so gebaut sein, dass keine Partikel und auch keine Schmierstoffe in den Reinraum gelangen können.

Der vorliegenden Erfindung liegt deshalb die Aufgabe zugrunde, ein Handhabungsgerät vorzuschlagen, von dem keine Partikelemission ausgeht und dass deshalb zur Verwendung in Reinräumen geeignet ist.

Diese Aufgabe wird bei einem Handhabungsgerät der eingangs beschriebenen Art erfindungsgemäß dadurch gelöst, dass zwischen dem Grundkörper und der Oberfläche des aus dem Grundkörper herausführbaren Abschnitts des Bewegungsgliedes Dichtmittel vorgesehen sind, die infolge einer Verschiebung des Bewegungsgliedes bei Vergrößerung des Hohlraumes Gas aus dem Reinraum in den Hohlraum und bei Verkleinerung des Hohlraumes kein Gas aus dem Hohlraum in den Reinraum eindringen lassen und dass der Hohlraum über einen Abgaskanal mit der Außenseite des Grundkörpers vebunden ist, wobei der Abgaskanal mit einer aus dem Reinraum führenden Leitung verbunden werden kann, und wobei Sperrmittel zur Regulierung des Strömungswiderstandes in dem Abgaskanal und/oder der Leitung vorgesehen sind, die infolge einer Verschiebung des Bewegungsgliedes bei Vergrößerung des Hohlraumes kein Gas - und damit keine Partikel - in den Hohlraum einströmen lassen und bei Verkleinerung des Hohlraumes Gas über den Ausgangskanal bzw. über die Leitung aus dem Hohlraum ausströmen lassen.

Dies hat den Vorteil, dass bei Verkleinerung des Hohlraumes, insbesondere beim Einfahren des Bewegungsgliedes in den Grundkörper, das in dem Hohlraum vorhandene Gas aufgrund der Dichtmittel nicht in den Reinraum gelangen kann, sondern über den Abgaskanal bzw. die Leitung abströmen kann. Andererseits wird bei Vergrößerung des Hohlraumes, also insbesondere wenn das Bewegungsglied aus dem Grundkörper herausgeführt wird, Gas aus dem Reinraum in den Hohlraum gesaugt. Der Saugeffekt tritt deshalb auf, weil bei größer werdendem Hohlraum die Sperrmittel ein Ansaugen von Gas über den Abgaskanal verhindern. Aufgrund der erfindungsgemäßen Lehre tritt folglich eine Art Pumpeffekt auf, da bei größer werdendem Hohlraum Gas aus dem Reinraum in den Hohlraum angesaugt wird, und bei kleiner werdendem Hohlraum Gas aus dem Hohlraum über den Abgaskanal bzw. die Leitung abgepumpt wird.

Bei Betätigung des Handhabungsgerätes strömt in keinem Zeitpunkt Gas aus dem Grundkörper in den Reinraum; der Reinraum wird deshalb nicht veschmutzt.

Vorteilhafterweise umfassen die Dichtmittel zwischen Grundkörper und der Oberfläche des aus dem Grundkörper herausführbaren Abschnitts des Bewegungsgliedes am Grundkörper angeordnete, sperrventilartig schaltende Dichtungen. Diese Dichtungen haben Ventileigenschaften, wobei sie beim Anströmen von einer Seite dichthalten und beim Anströmen von der anderen Seite Gas passieren lassen. Bei Vergrößerung des Hohlraumes im Grundkörper kann folglich Gas in den Hohlraum einströmen. Bei Verkleinerung des Hohlraumes und des damit einhergehenden höheren Druckes innerhalb des Grundkörpers dichten die Dichtmittel derart, dass kein Gas aus dem Grundkörper in den Reinraum strömen kann.

Erfindungsgemäß kann ferner vorgesehen sein, dass die Dichtmittel einen kleinen Spalt zwischen dem Grundkörper und der Oberfläche des aus dem Grundkörper herausführbaren Abschnitts des Bewegungsgliedes umfassen, wobei der Spalt einen relativ hohen Strömungswiderstand für das Gas bildet. Eine derartige Ausgestaltung ist so auszulegen, dass der Strömungswiderstand aufgrund des Spaltes wesentlich größer ist, als der Strömungswiderstand, den der Abgaskanal bzw. die Leitung bildet. Beim sich verkleinerndem Hohlraum wird Gas nicht über den Spalt in den Reinraum strömen, sondern ausschließlich über den den geringeren Strömungswiderstand aufweisenden Abgaskanal bzw. die Leitung aus dem Handhabungsgerät ausströmen.

Eine weitere Ausgestaltung der Erfindung sieht vor, dass die Sperrmittel ein Sperrventil, insbesondere ein Rückschlagventil, umfassen. Das Sperrventil ist hierbei so auszulegen, dass es bei kleiner werdendem Hohlraum bzw. bei ansteigendem Druck innerhalb des Grundkörpers öffnet und Gas aus dem Hohlraum in den Abgaskanal bzw. in die Leitung einströmen kann.

Bei einer besonders bevorzugten Ausführungsform der Erfindung werden die Sperrmittel über Schaltmittel in Abhängigkeit der Bewegung des Bewegungsgliedes und/oder des Antriebes geschaltet. Dies hat den Vorteil, dass zeitgleich mit Iniziierung der Bewegung des Bewegungsgliedes das Sperrmittel aktiv geöffnet bzw. geschlossen wird. Insbesondere beim Rückführen des Bewegungsgliedes bzw. bei kleiner werdendem Hohlraum wird dadurch verhindert, dass in dem Hohlraum ein der Bewegungsrichtung entgegenwirkender Überdruck entsteht.

Bei einer Ausgestaltung der Erfindung ist der Antrieb über ein in einem Getriebehohlraum angeordneten Getriebe mit dem Bewegungsglied gekoppelt. Vorteilhafterweise ist ein Verbindungskanal zwischen dem Hohlraum und dem Getriebehohlraum bzw. zwischen dem Abgaskanal und dem Getriebehohlraum vorgesehen. Ein derartiger Verbindungskanal hat den Vorteil, dass ein sich in dem Getriebehohlraum veränderndes Gasvolumen über den Abgaskanal bzw. die Leitung abgeführt werden kann.

Bei einer vorteilhaften Ausbildung der Erfindung ist das Getriebe ein Schrägzuggetriebe. Mit derartigen Getrieben können hohe Kräfte unter Beanspruchung von relativ geringem Bauraum übertragen werden.

Eine weitere, vorteilhafte Ausgestaltung der Erfindung kennzeichnet sich dadurch, dass der Antrieb einen einseitig gasbeaufschlagbaren, in einem Zylinderraum axial verschiebbaren, über eine Kolbenstange mit dem Bewegungsglied gekoppelten Kolben umfasst, wobei aufgrund der Gasbeauschlagung sich der Hohlraum verkleinert. Eine derartige Ausgestaltung hat den Vorteil, dass bei Gasbeaufschlagung aufgrund des sich verkleinernden Hohlraumes Gas aus dem Grundkörper über den Abgaskanal und die geöffneten Sperrmittel abströmen kann. Falls der pneumatische Antrieb eine Undichtheit aufweist, d.h. falls während der Gasbeaufschlagung das Gas in den Hohlraum des Grundkörpers strömt, tritt das Gas nicht aus dem Grundkörper aus, sondern es strömt über den Abgaskanal ab. Würde bei Gasbeaufschlagung des Kolbens sich der Hohlraum vergrößern und dabei die Sperrmittel geschlossen sein, würde bei undichtem Kolben Gas in die Aussparung bzw. in den Hohlraum gelangen und aus dem Grundkörper in den Reinraum abströmen. Zudem wird das Gas zwischen dem nicht gasbeaufschlagten Kolbenraum und dem Hohlraum hin und her pendeln und die Pumpwirkung wäre eingeschränkt.

In diesem Zusammenhang kann erfindungsgemäß vorgesehen sein, dass die nicht gasbeaufschlagbare Seite des Kolbens über ein Federelement druckbeaufschlagbar ist. Das Vergrößern des Hohlraumes erfolgt demnach über eine Federkraft. Ein derartiges Federelement kann beispielsweise eine Spiral- oder eine Blattfeder sein.

Eine weitere Ausführungsform zeichnet sich dadurch aus, dass der Abgaskanal mit einem Unterdruckerzeuger gekoppelt ist. Über den Unterdruckerzeuger kann in dem Hohlraum bzw. in der Aussparung des Grundkörpers ein Unterdruck erzeugt werden, wodurch zusätzlich verhindert wird, dass aus dem Grundkörper Partikel in den Reinraum gelangen können.

Vorteilhafterweise beaufschlagt der Unterdruckerzeuger den Hohlraum mit Unterdruck nur dann, wenn sich der Hohlraum aufgrund der Verschiebung des Bewegungsgliedes verkleinert.

Das Handhabungsgerät kann erfindungsgemäß eine Greif- oder Spannvorrichtung, insbesondere ein Zwei-Finger-Parallelgreifer oder ein Drei- oder Mehr-Finger-Zentrischgreifer sein, wobei die Grundbacken der Greifoder Spannvorrichtung das Bewegungsglied bildet.

Andererseits ist denkbar, dass das Handhabungsgerät ein Linearantrieb ist, wobei Kolbenstangen und/oder Führungsstangen des Linearantriebs das Bewegungsglied bilden.

Die eingangs genannte Aufgabe wird außerdem durch ein Verfahren zum Betreiben eines im Vorhergehenden beschriebenen Handhabungsgeräts gelöst, dass sich dadurch kennzeichnet, dass ein Steuergerät die Sperrmittel abhängig von der Bewegung des Bewegungsgliedes und/oder des Antriebes derart schaltet, dass die Sperrmittel geöffnet sind, wenn sich der Hohlraum aufgrund der Verschiebung des Bewegungsgliedes verkleinert und geschlossen sind, wenn sich der Hohlraum vergrößert.

Eine Fortbildung des Verfahrens kennzeichnet sich dadurch, dass der Unterdruckerzeuger über das Steuergerät betätigt wird und den Hohlraum dann mit Unterdruck beaufschlagt, wenn sich der Hohlraum aufgrund der Verschiebung des Bewegungsgliedes verkleinert.

Das erfindungsgemäße Verfahren hat den Vorteil, dass gewährleistet wird, dass während des Betriebes des Handhabungsgerätes keinerlei Partikel aus dem Handhabungsgerät in den Reinraum austreten können.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: einen Längsschnitt durch eine erste erfindungsgemäße Greifvorrichtung beim Ausfahren der Grundbacken;
- Figur 2: die Greifvorrichtung gemäß Figur 1 beim Einfahren der Grundbacken;
- Figur 3: eine zweite erfindungsgemäße Greifvorrichtung beim Ausfahren der Grundbacken;
- Figur 4: die Greifvorrichtung nach Figur 3 beim Einfahren der Grundbacken; und
- Figur 5: einen dritten erfindungsgemäßen Linearantrieb beim Einfahren des Bewegungsgliedes.

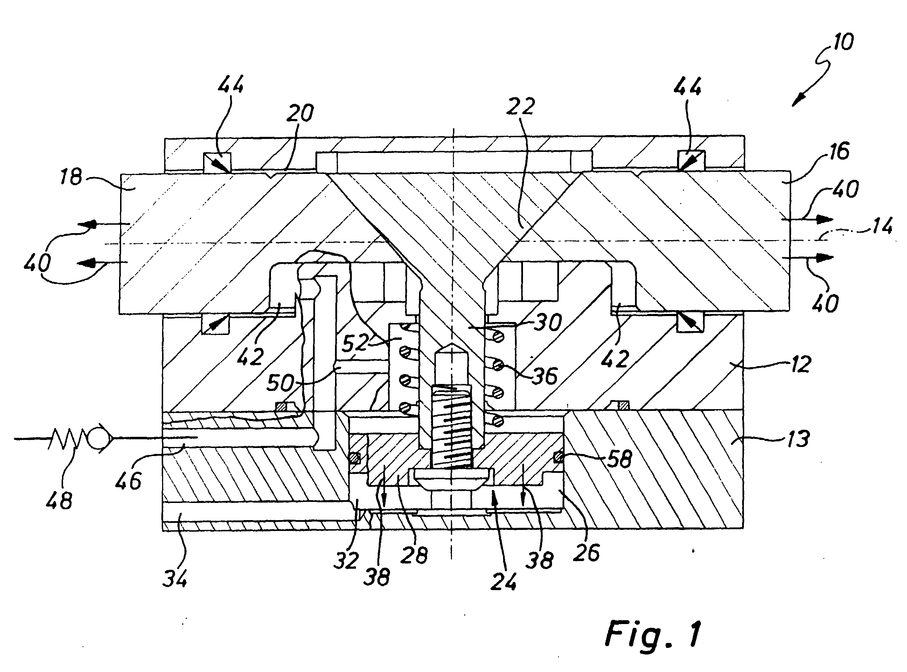

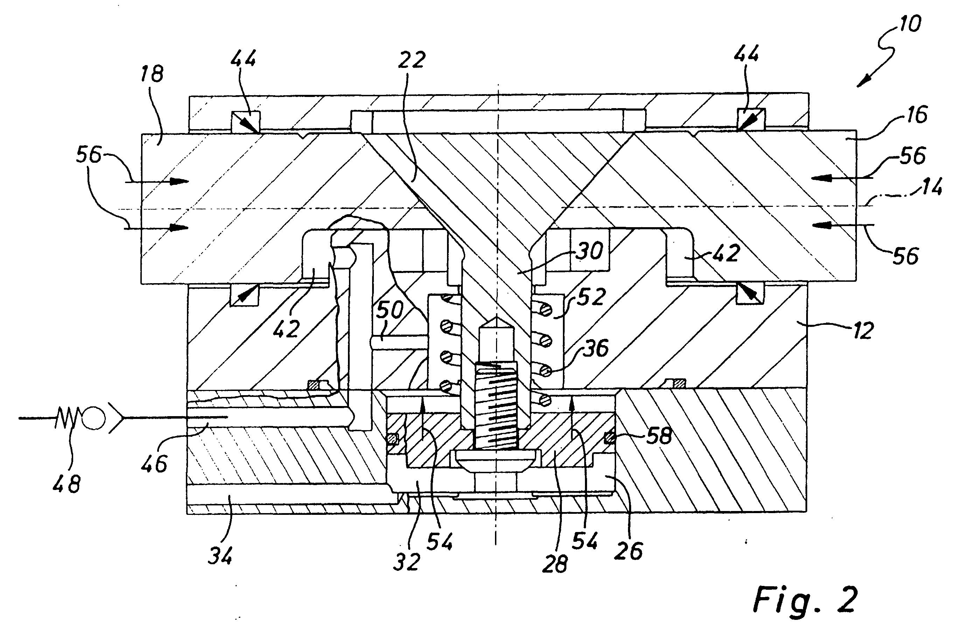

Die Figuren 1 und 2 zeigen eine erste Ausführungsform eines erfindungsgemäßen Handhabungsgerätes in Form einer Zwei-Finger-Parallelgreifvorrichtung 10. Die Greifvorrichtung 10 ist zur Verwendung in Reinräumen vorgesehen, weshalb von der Greifvorrichtung 10 keinerlei Partikelemission ausgehen darf.

Die Greifvorrichtung 10 weist einen Grundkörper 12 auf, in dem sich zwei Bewegungsglieder in Form von zwei entlang einer Linie 14 axial verfahrbar gelagerten Grundbacken 16 und 18 befinden. Die Grundbacken 16, 18 sind in einer Aussparung 20 des Grundkörpers 12 angeordnet. Die Grundbacken 16, 18 sind ferner an den einander zugewandten Seiten über ein Getriebe in Form eines bekannten Schrägzuges bzw. Keilhakengetriebes 22 mit einem Antrieb 24 gekoppelt. Der Antrieb 24 umfasst einen in einem Zylinder 26 verschieblich gelagerten Kolben 28, dessen Kolbenstange 30 mit dem Schrägzug 22 verbunden ist. Der Zylinder 26 ist in einem Getriebegehäuseabschnitt 13 angeordnet. Der Kolben 28 ist auf seiner der Kolbenstange 30 abgewandten Seite über eine Druckkammer 32 mit einem Fluid, und insbesondere mit Luft, druckbeaufschlagbar. Dazu ist ein von der Außenseite des Grundkörpers 12 zu der Druckkammer 32 verlaufender Druckkanal 34 vorgesehen. Auf der der Druckkammer 32 abgewandten Seite ist der Kolben 28 über eine sich an dem Grundkörper 12 abstützenden Druckfeder 36 kraftbeaufschlagt.

In der Figur 1 ist die Druckkammer 32 drucklos geschaltet, weshalb die Druckfeder 36 den Kolben 28 in Richtung der Pfeile 38 bewegt. Über den Schrägzug 22 werden infolge der Bewegung des Kolbens 28 die Grundbacken 16 und 18 aus dem Grundkörper 12 in Richtung der Pfeile 40 herausgeführt.

Beim Ausfahren der Grundbacken 16 und 18 vergrößern sich die innerhalb des Grundkörpers 12 für ein Gasvolumen zur Verfügung stehenden Hohlräume 42 und 52.

Bei der Ausführungsform gemäß Figur 1 und 2 sind zwischen den Oberflächen der aus dem Grundkörper 12 herausfahrenden Abschnitte der Grundbacken 16 und 18 und dem Grundkörper 12 Dichtmittel in Form von sperrventilartig schaltenden Dichtringen 44 angeordnet. Die Dichtringe 44 umgeben die im Querschnitt vorteilhafterweise kreisrund ausgebildeten, aus dem Grundkörper 12 herausfahrenden Abschnitte der Grundbacken 16 und 18.

Der innerhalb des Grundkörpers 12 vorhandene Hohlraum 42 ist über einen Abgaskanal 46 mit der Außenseite des Grundkörpers verbunden, wobei der Abgaskanal 46 mit einer aus dem Reinraum führenden, nicht dargestellten, Leitung verbunden ist. In dem Abgaskanal 46 bzw. der Leitung ist ein schematisch angedeutetes Rückschlagventil 48 vorgesehen. Der Abgaskanal 46 ist außerdem über einen Verbindungskanal 50 mit dem nicht gasbeaufschlagten Kolbenraum bzw. dem das Getriebe bzw. die Druckfeder 36 aufnehmenden Getriebehohlraum 52 verbunden.

Bei der in der Figur 1 dargestellten Ausfahrsituation der Grundbacken 16 und 18 ist das Rückschlagventil 48 geschlossen. Aufgrund der Vergrößerung des Hohlraumes 42 entsteht innerhalb des Grundkörpers 12 ein Unterdruck. Die Dichtringe 44 sind derart geschaltet, dass Gas von außerhalb der Greifvorrichtung 10, d.h. aus dem Reinraum, zwischen dem Grundkörper 12 und den Grundbacken 16, 18 in die Greifvorrichtung 10 eindringen kann. Deshalb wird beim Ausfahren der Grundbacken 16, 18 Gas aus dem Reinraum in den Hohlraum 42 gesaugt. Aufgrund des geschlossenen Rückschlagventils 48 kann kein Gas über den Abgaskanal 46 angesaugt werden. Ferner kann kein Gas über den Druckkanal 34 angesaugt werden, da aufgrund der Federkraft über den Druckkanal 34 das in der Druckkammer 32 vorhandene Gas aus der Greifvorrichtung 10 über eine nicht dargestellte, aus dem Reinraum führende Leitung abströmt.

Beim Ausfahren der Grundbacken 16, 18 kann von der Greifvorrichtung 10 keine Partikelemission ausgehen, da ausschließlich Gas aus dem Reinraum in die Greifvorrichtung - und deshalb kein Gas aus der Greifvorrichtung 10 in den Reinraum - strömt.

In der Figur 2 ist die Einfahrsituation der Grundbacken 16 und 18 dargestellt. Hierbei wird der Druckraum 32 mit Gasdruck beaufschlagt, wodurch sich der Kolben 28 gegen die Federkraft in Richtung der Pfeile 54 bewegt. Über den Schrägzug 22 werden die Grundbacken 16 und 18 in Richtung der Pfeile 56 eingezogen. Dadurch verringern sich die für ein Gasvolumen zur Verfügung stehenden Hohlräume 42 und 52 in der Greifvorrichtung 10. Aufgrund der sperrventilartig ausgebildeten Dichtringe 44 kann kein Gas aus dem Grundkörper 12 entlang der Grundbacken 16 und 18 aus der Greifvorrichtung 10 austreten. Vielmehr öffnet sich das Sperrventil 48 aufgrund des innerhalb der Greifvorrichtung 10 entstehenden geringen Überdrucks. Somit kann Gas aus der Greifvorrichtung 10 über den Abgaskanal 46 und die dargestellte, aus dem Reinraum führende Leitung abgeführt werden. Folglich wird auch beim Einfahren der Grundbacken 16 und 18 gewährleistet, dass keinerlei Gas aus der Greifvorrichtung in den Greifraum gelangen kann.

Selbst wenn der Fall auftritt, dass beim Druckbeaufschlagen des Druckraumes 32 Gas zwischen der Wand des Zylinders 26 und der Mantelfläche des Kolbens 28 trotz vorgesehenen Dichtmitteln 58 in den Getriebehohlraum 52 gelangt, so führt dies nicht zu einem Austreten von Gas aus der Greifvorrichtung 10. Über den Verbindungskanal 52 bzw. über den Abgaskanal 46 kann das Gas nämlich aufgrund des geöffneten Rückschlagventils 48 ungehindert aus der Greifvorrichtung 10 abströmen. Es kommt folglich selbst bei Undichtheiten zwischen Kolben 28 und Zylinder 26 zu keinem unerwünschten Ausströmen von Gas aus der Greifvorrichtung 10 in den Reinraum.

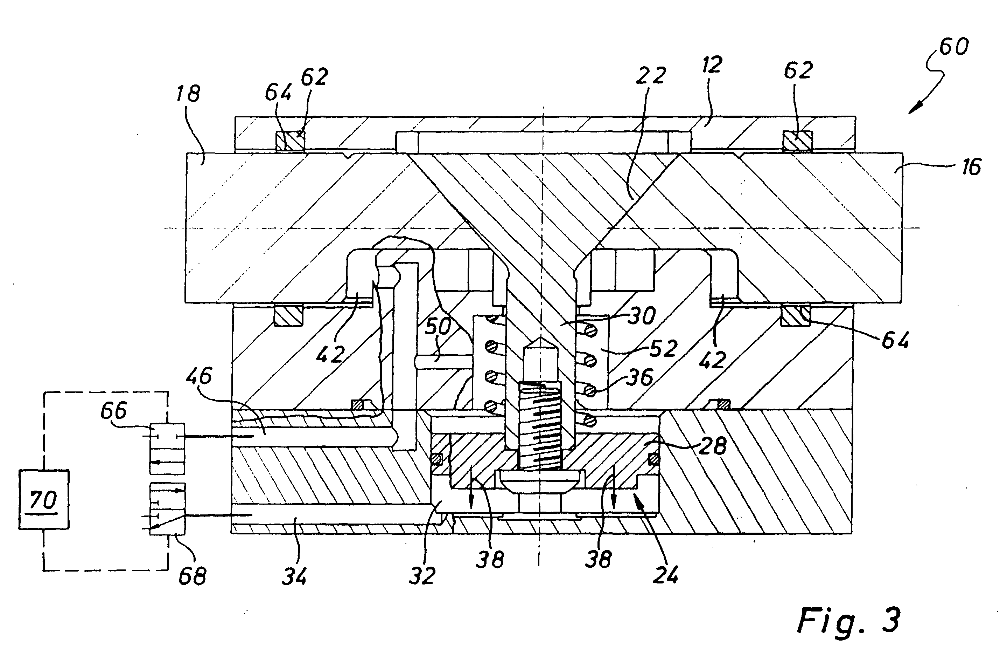

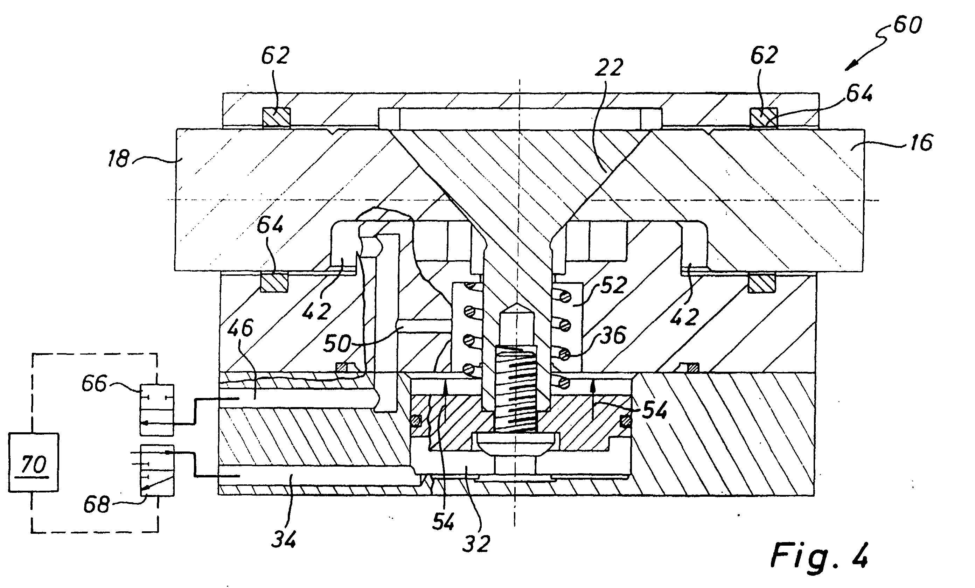

Die Figuren 3 und 4 zeigen eine zweite Ausführungsform der Erfindung in Form einer Greifvorrichtung 60. Die Greifvorrichtung 60 ist weitgehend mit der Greifvorrichtung 10 gemäß Figur 1 und 2 identisch. Die identischen Bauteile der Greifvorrichtungen 10 und 60 sind deshalb mit den gleichen Bezugszahlen versehen.

Bei der Greifvorrichtung 60 sind im Unterschied zu der Greifvorrichtung 10 keine ventilartigen Dichtringe 44, sondern Passringe 62 zwischen dem Grundgehäuse 12 und den Grundbacken 16 und 18 vorgesehen. Zwischen den Passringen 62, die grundkörperseitig befestigt sind, und den Oberflächen der Grundbacken 16 und 18 ist ein kleiner Ringspalt 64 vorgesehen, der einen relativ hohen Strömungswiderstand für das Gas bildet. Die Passringe 62 weisen eine hartverschleißende Beschichtung auf.

Ferner sind im Unterschied zu der Greifvorrichtung 10 bei der Greifvorrichtung 60 schaltbare Wegeventile 66 und 68 vorgesehen. Das Wegeventil 66 öffnet bzw. sperrt den Abgaskanal 46 bzw. die an den Abgaskanal 46 angeschlossene, nicht dargestellte Leitung. Das Wegeventil 68 ist zur Schaltung des Druckkanals 34 bzw. der Druckkammer 32 vorgesehen. Die beiden Wegeventile 66 und 68 werden von einem schematisch dargestellten Steuergerät 70 geschaltet.

In der Figur 3 ist die Ausfahrsituation der Greifvorrichtung 60 dargestellt, in der die Grundbacken 16 und 18 aus dem Grundkörper 12 herausgefahren werden. Dabei ist das Wegeventil 68 wie in Figur 3 dargestellt geschaltet. Aufgrund der Federkraft wird das Gas aus der Druckkammer 32 über den Druckkanal 34 und die nicht dargestellte, aus dem Reinraum führende Leitung abströmen.

Gleichzeitig ist der Abgaskanal 46 gesperrt, wie der dargestellten Stellung des Wegeventils 66 entnommen werden kann. Über den Abgaskanal 46 kann demnach kein Gas in die Greifvorrichtung strömen. Vielmehr strömt bei ausfahrenden Grundbacken 16 und 18 aufgrund des sich vergrößernden Hohlraumes 42 Gas aus dem Reinraum über den Spalt 64 in die Greifvorrichtung 60 ein. Folglich wird gewährleistet, dass bei ausfahrenden Grundbacken 16 und 18 keine Partikelemission von der Greifvorrichtung 60 ausgehen kann.

In der Figur 4 ist die Einfahrsituation der Grundbacken 16 und 18 dargestellt. Zur Einleitung der Einfahrbewegung schaltet das Steuergerät 70 zeitgleich die Wegeventile 66 und 68 in ihre jeweils zweite Schaltstellung. Gemäß der in Figur 4 gezeigten Schaltstellung des Wegeventils 68 strömt aus einem nicht dargestellten Druckspeicher Gas über die Druckleitung 34 in die Druckkammer 32. Der Kolben bewegt sich deshalb in die durch die Pfeile 54 angedeutete Richtung. Durch das Rückfahren der Grundbacken 16 und 18 verkleinert sich der für ein Gasvolumen zur Verfügung stehende Hohlraum 42 in dem Grundkörper 12. Wie der in der Figur 4 dargestellten Schaltung des Wegeventils 66 entnommen werden kann, ist der Abgaskanal 46 geöffnet, so dass Gas aus dem Hohlraum 42 bzw. dem Hohlraum 52 über den Abgaskanal 46 bzw. den Verbindungskanal 50 aus der Greifvorrichtung 10 in die nicht dargestellte, aus dem Reinraum führende Leitung abströmen kann. Dadurch, dass der Strömungswiderstand des Spaltes 64 im Vergleich zum Strömungswiderstand der Abgasleitung 46 sehr groß ist, wird kein Gas aus der Greifvorrichtung 60 durch den Spalt 64 in den Reinraum abströmen. Folglich wird gewährleistet, dass von der Greifvorrichtung 60 auch bei einfahrenden Grundbacken 16 und 18 keine Partikelemission ausgeht.

Das Vorsehen von Passringen 62, die vorteilhafterweise die Grundbacken 16 und 18 nicht berühren, hat den Vorteil, dass kein Abrieb bzw. kein Verschleiß auftritt, der zu einer Verschmutzung führen könnte.

Anstelle von Passringen 62 ist erfindungsgemäß ebenfalls denkbar, den Spalt zwischen Grundkörper 12 und den Oberflächen der Grundbacken 16 und 18 passgenau auszubilden. Dies hat den Vorteil, dass zusätzliche Bauteile, seien es Passringe oder Dichtringe, entfallen.

Bei der Ausführungsform gemäß der Figuren 3 und 4 ist ebenfalls denkbar, anstelle von Passringen 62 schaltende Dichtungen 44 vorzusehen, wie sie bei der Greifvorrichtung 10 gemäß den Figuren 1 und 2 gezeigt sind.

Die Greifvorrichtung 60 gemäß den Figuren 3 und 4 hat insgesamt den Vorteil, dass aufgrund der aktiven Schaltung der wegeventile 66 und 68 über das Steuergerät 70, insbesondere beim Rückfahren der Grundbacken 16 und 18 innerhalb der Greifvorrichtung 60 kein Überdruck entstehen muss, um ein mit dem Abgaskanal 46 gekoppeltes Rückschlagventil zu öffnen, wie es bei der Greifvorrichtung 10 vorgesehen ist. Das Wegeventil 66 wird vielmehr im geeigneten Zeitpunkt automatisch geöffnet.

Erfindungsgemäß ist denkbar, dass bei den Greifvorrichtungen 10 und 60 der Abgaskanal 46 mit einem Unterdruckerzeuger verbunden ist, der bei einfahrenden Grundbacken 16 und 18 Gas aus der Greifvorrichtung saugt. Durch diese Maßnahme wird zusätzlich gewährleistet, dass kein Gas aus der Greifvorrichtung 10 bzw. 60 in den Reinraum dringen kann.

Der Unterdruckerzeuger wird vorteilhafterweise ebenfalls durch das Steuergerät 70 betätigt, und zwar dann, wenn sich der Hohlraum 42 aufgrund der Verschiebung der Grundbacken 16 und 18 verkleinert.

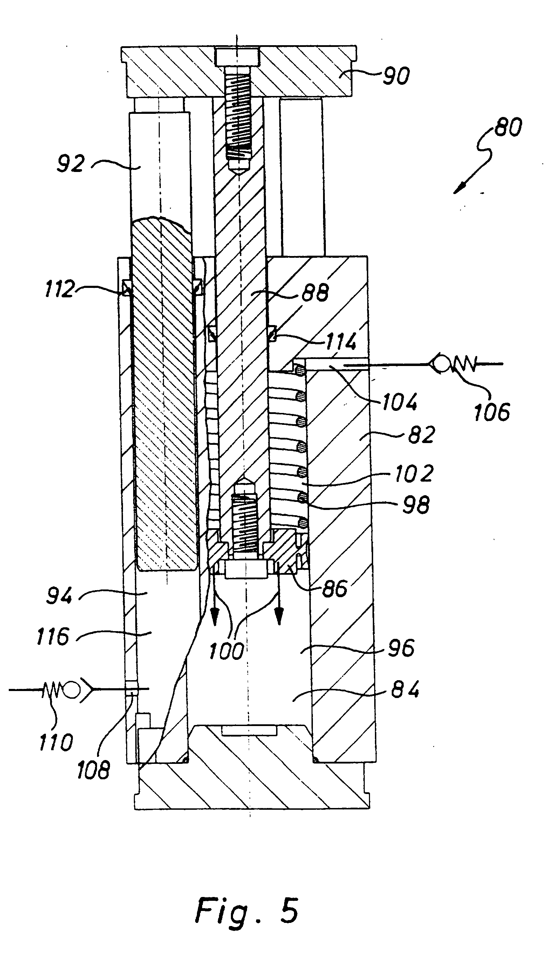

Die Figur 5 zeigt eine dritte Ausführungsform der Erfindung in Form eines Linearantriebes 80. Der Linearantrieb 80 ist zur Verwendung in einem Reinraum vorgesehen, weshalb von ihm keine Partikelemission ausgehen darf. Der Linearantrieb 80 weist einen Grundkörper 82, in dem ein in einem Zylinder 84 verfahrbarer Kolben 86 ist, auf. Der Kolben 86 weist eine Kolbenstange 88 auf, deren freies Ende aus dem Grundkörper 82 ragt und mit einem Hubtisch 90 verbunden ist. An dem Hubtisch 90 ist eine Führungsstange 92 angeordnet, die in ein Führungsloch 94 des Grundkörpers 82 eingreift.

Zum Ausfahren der Kolbenstange 88, die bei dieser Ausführungsform ein erstes Bewegungsglied bildet, wird der der Kolbenstange 88 abgewandte Zylinderraum 96 mit Gasdruck beaufschlagt. Das Rückführen des Hubtisches 90 erfolgt durch eine sich am Grundkörper 82 abstützende Druckfeder 98.

In der Figur 5 ist die Einfahrsituation der Kolbenstange 88 bzw. des Hubtisches 90 dargestellt. Dazu ist der Zylinderraum 96 drucklos geschaltet. Der Kolben 86 wird über die Druckfeder 98 in Richtung der Pfeile 100 verfahren.

Der die Druckfeder 98 aufnehmende Zylinderraum 102 - der einen Hohlraum im Sinne des Anspruchs 1 bildet - ist über eine Abgasleitung 104 mit einer nicht dargestellten, aus dem Reinraum führenden Leitung verbunden. Diese Leitung ist über ein Rückschlagventil 106 geschlossen.

Das Führungsloch 94 ist als Sackloch ausgebildet. Es ist mit einem Abgaskanal 108 verbunden, der über eine nicht dargestellte Leitung aus dem Reinraum hinausführt. Diese Leitung ist mit einem Rückschlagventil 110 versehen.

Der für ein Gasvolumen zur Verfügung stehende Hohlraum 116 innerhalb des Führungslochs 94 ändert je nach Stellung der Führungsstange 92 - die ein zweites Bewegungsglied bildet - sein Volumen. Der Hohlraum 116 ist demnach ebenfalls ein Hohlraum im Sinne des Anspruchs 1.

Beim Rückfahren des Hubtisches 90 ist das Rückschlagventil 106 geschlossen und das Rückschlagventil 110 geöffnet. Beim Rückführen der Führungsstange 92 verkleinert sich der Hohlraum 116 und es entsteht in dem Hohlraum 116 ein Überdruck, wodurch das Rückschlagventil 110 geöffnet wird und Gas abströmen kann. Aufgrund von ventilartig schaltenden Dichtmitteln 112 zwischen der Führungsstange 92 und dem Grundkörper 82 wird verhindert, dass Gas aus dem Führungsloch 94 in den Reinraum entweichen kann. Beim Rückführen der Kolbenstange 88 wird der Zylinderraum 102 vergrößert, weshalb ein Unterdruck in dem Zylinderraum 102 entsteht. Das Rückschlagventil 106 ist geschlossen. Folglich wird Gas aus dem Reinraum entlang der Kolbenstange 88 vorbei an rückschlagventilartig schaltenden Dichtmitteln 114 in den Zylinderrauum 102 gesaugt. Damit wird beim Rückführen des Hubtisches 90 gewährleistet, dass von dem Linearantrieb 80 keine Partikelemission ausgehen kann.

Beim Ausfahren des Hubtisches 90 ist das Rückschlagventil 110 geschlossen. Luft wird aus dem Reinraum in den größer werdenden Hohlraum 116 über die Dichtmittel 112 angesaugt. Gleichzeitig wird der Zylinderraum 102 verkleinert. Aufgrund des entstehenden Überdruckes öffnet sich das Rückschlagventil 106, wodurch Gas aus dem Zylinderraum 102 abströmen kann. Aufgrund der Dichtmittel 114 tritt kein Gas aus dem Grundkörper 82 entlang der Kolbenstange 88 in den Reinraum. Folglich wird auch beim Ausfahren des Hubtisches gewährleistet, dass kein Gas aus dem Linearantrieb 80 in den Reinraum gelangt und keine Partikelemission stattfinden kann.

Selbst bei Austreten von Gas aus dem Zylinderraum 96 in den Zylinderraum 102 tritt kein Gas aus dem Linearantrieb 80 aus, da der Abgaskanal 104 geöffnet ist und Gas abströmen kann.

Anstelle der Verwendung von Rückschlagventilen 106 und 110 kann der Linearantrieb 80 mit schaltbaren Wegeventilen, wie sie in den Figuren 3 und 4 dargestellt sind, betrieben werden.

Ferner ist denkbar, anstelle von ventilartigen Dichtmitteln 112 und 114 den Strömungswiderstand erhöhende Spalte gemäß den Figuren 3 und 4 vorzusehen.

## Patentansprüche

1. Handhabungsgerät (10, 60, 80), insbesondere zur Verwendung in Reinräumen, mit einem Grundkörper (12, 82), mit einer im Grundkörper (12, 82) vorhandenen Aussparung (20, 84, 94) zur Aufnahme wenigstens eines im Grundkörper (12, 82) verschieblich gelagerten Bewegungsglied (16, 18, 88, 92) und mit einem in dem Grundkörper (12, 82) angeordneten Antrieb (24, 26, 28, 84, 86), wobei das Bewegungsglied (16, 18, 88, 92) durch den Antrieb (24, 26, 28, 84, 86) wenigstens abschnittsweise aus dem Grundköper (12, 82) herausführbar ist und wobei aufgrund der Verschiebung des Bewegungsgliedes (16, 18, 88, 92) der in dem Grundkörper (12, 82) für ein Gasvolumen zur Verfügung stehende Hohlraum (42, 102, 116) sein Volumen ändert, **dadurch gekennzeichnet, dass** zwischen dem Grundkörper (12, 82) und der Oberfläche des aus dem Grundkörper (12, 82) herausführbaren Abschnitts des Bewegungsgliedes (16, 18, 88, 92) Dichtmittel (44, 64, 112, 114) vorgesehen sind, die infolge einer Verschiebung des Bewegungsgliedes (16, 18, 88, 92) bei Vergrößerung des Hohlraumes (42, 102, 116) Gas aus dem Reinraum in den Hohlraum (42, 102, 116) und bei Verkleinerung des Hohlraumes (42, 102, 116) kein Gas aus dem Hohlraum (42, 12, 116) in den Reinraum eindringen lassen und dass der Hohlraum (42, 102, 116) über einen Abgaskanal (46, 104, 108) mit der Außenseite des Grundköpers verbunden ist, wobei der Abgaskanal (46, 104, 108) mit einer aus dem Reinraum führenden Leitung verbunden werden kann und wobei Sperrmittel (48, 66, 106, 110) zur Regulierung des Strömungswiderstands in dem Abgaskanal (46, 104, 108) und/oder der Leitung vorgesehen sind, die infolge einer Verschiebung des Bewegungsgliedes (16, 18, 88, 92) bei Vergrößerung des Hohlraumes (42; 102, 116) kein Gas über den Abgaskanal (46, 104, 108) in den Hohlraum (42, 102, 116) einströmem lassen und bei Verkleinerung des Hohlraumes (42, 102, 116) Gas über den Abgaskanal (46, 104, 108) bzw. über die Leitung aus dem Hohlraum (42, 102, 116) ausströmen lassen.

2. Handhabungsgerät (10, 80) nach Anspruch 1, **dadurch gekennzeichnet, dass** die Dichtmittel eine am Grundkörper angeordnete, sperrventilartig schaltende Dichtung (44, 112, 114) umfassen.

3. Handhabungsgerät (60) nach Anspruch 1, **dadurch gekennzeichnet, dass** die Dichtmittel (62) einen kleinen Spalt (64) zwischen dem Grundkörper (12) und der Oberfläche des aus dem Grundkörper herausführbaren Abschnitts des Bewegungsgliedes (16, 18) umfassen, wobei der Spalt (64) einen relativ hohen Strömungswiderstand für das Gas bildet.

4. Handhabungsgerät (10, 60, 80) nach Anspruch 1, 2 oder 3, **dadurch gekennzeichnet, dass** die Sperrmittel ein Sperrventil (48, 66, 106, 110), insbesondere ein Rückschlagventil (48, 106, 110), umfassen.

5. Handhabungsgerät (60) nach einem der vorhergehenden Ansprüche, **dadurch gekennzeichnet, dass** die Sperrmittel (66) über Schaltmittel (70) in Abhängigkeit der Bewegung des Bewegungsgliedes (16, 18) und/oder des Antriebes (24) geschaltet werden.

6. Handhabungsgerät (10, 60) nach einem der vorhergehenden Ansprüche, **dadurch gekennzeichnet, dass** der Antrieb (24) über ein in einem Getriebehohlraum (50) angeordneten Getriebe (22) mit dem Bewegungsglied (16, 18) gekoppelt ist.

7. Handhabungsgerät (10, 60) nach Anspruch 6, **dadurch gekennzeichnet, dass** ein Verbindungskanal (52, 46) zwischen dem Hohlraum (42) und dem Getriebehohlraum (50) und/oder zwischen dem Abgaskanal (46) und Getriebehohlraum (50) vorgesehen ist.

8. Handhabungsgerät (10, 60) nach Anspruch 6 oder 7, **dadurch gekennzeichnet, dass** das Getriebe ein Schrägzug- bzw. ein Keilhakengetriebe (22) ist.

9. Handhabungsgerät (10, 60, 80) nach einem der vorhergehenden Ansprüche, **dadurch gekennzeichnet, dass** der Antrieb einen einseitig gasbeaufschlagbaren, in einem Zylinderraum (26, 102) axial verschiebbaren, über eine Kolbestange (30, 88) mit dem Bewegungsglied (16, 18, 88) gekoppelten Kolben 28, 86) umfasst, wobei sich aufgrund der Gasbeaufschlagung der Hohlraum (42, 102) verkleinert.

10. Handhabungsgerät (10, 60, 80) nach Anspruch 9, **dadurch gekennzeichnet, dass** die nicht gasbeaufschlagbare Seite des Kolbens (28, 86) über ein Federelement (36, 98) druckbeaufschlagbar ist.

11. Handhabungsgerät (10, 60, 80) nach einem der vorhergehenden Ansprüche, **dadurch gekennzeichnet, dass** der Abgaskanal (46, 104, 108) mit einem Unterdruckerzeuger gekoppelt ist.

12. Handhabungsgerät (10, 60, 80) nach Anspruch 11, **dadurch gekennzeichnet, dass** der Unterdrückerzeuger den Hohlraum (42, 102, 116) mit Unterdruck beaufschlagt, wenn sich der Hohlraum (42, 102, 116) aufgrund der Verschiebung des Bewegungsgliedes (16, 18, 88, 92) verkleinert.

13. Handhabungsgerät (10, 60) nach einem der vorhergehenden Ansprüche, **dadurch gekennzeichnet, dass** das Handhabungsgerät eine Greif- oder Spannvorrichtung, insbesondere ein Zwei-Finger-Parallelgreifer oder ein Drei- oder Mehr-Finger-Zentrischgreifer ist, wobei Grundbacken (16, 18) der Greif- oder Spannvorrichtung das Bewegungsglied bilden.

14. Handhabungsgerät (80) nach einem der Ansprüche 1 bis 12, **dadurch gekennzeichnet, dass** das Handhabungsgerät ein Linearantrieb ist, wobei Kolbenstangen (88) und/oder Führungsstangen (92) des Linearantriebs das Bewegungsglied bilden.

15. Verfahren zum Betreiben eines Handhabungsgeräts (10, 60, 80) nach einem der vorhergehenden Ansprüche, **dadurch gekennzeichnet, dass** ein Steuergerät (70) des Handhabungsgeräts die Sperrmittel (66) abhängig von der Bewegung des Bewegungsgliedes (16, 18, 88, 92) und/oder des Antriebs (24) derart schaltet, dass die Sperrmittel (66) geöffnet sind wenn sich der Hohlraum (42, 102, 116) aufgrund der Verschiebung des Bewegungsgliedes (16, 18, 88, 92) verkleinert und geschlossen sind, wenn sich der Hohlraum (42, 102, 116) vergrößert.

16. Verfahren nach Anspruch 15, **dadurch gekennzeichnet, dass** der Unterdruckerzeuger über das Steuergerät (70) betätigt wird und den Hohlraum (42, 102, 116) dann mit Unterdruck beaufschlagt, wenn sich der Hohlraum (42, 102, 116) aufgrund der Verschiebung des Bewegungsgliedes (16, 18, 88, 92) verkleinert.

## Claims

1. Handling device (10, 60, 80), particularly for use in clean rooms, with a carrier member (12, 82) and at least one recess (20, 94, 94) within the carrier member (12, 82) for receiving at least one movable limb (16,18, 88, 92) mounted for displacement, as well as a drive unit (24, 26, 28, 84, 86) located within the carrier member (12, 82), whereby the movable limb (16, 18, 88, 92) can be driven out of the carrier member (12, 82) by the drive unit, in sections at least, and whereby the cavity (42, 102, 116) provided in the carrier member (12, 82) for a volume of gas changes its volume because of the displacement of the movable limb (16, 18, 88, 92), **characterised in that** sealing means (44, 64, 112, 114) are provided between the carrier member (12, 82) and the surface of the section of the movable limb (16, 18, 88, 92) that can be led out of the carrier member (12, 82), which allow gas to penetrate into the cavity (42, 102, 116) from the clean room when the cavity (42, 102, 116) is enlarged as a result of the displacement of the movable limb (16, 18, 88, 92), while no gas penetrates into the clean room from the cavity (42, 102, 116) when diminution of the cavity (42,102, 116) occurs and the cavity (42, 102,116) is connected with the exterior of the carrier member via a waste gas duct (46, 104, 108), whereby the waste gas duct (46, 104, 108) can be connected with a tube leading from the clean room and whereby blocking means (48, 66, 106, 1.10) are provided for the regulation of flow resistance in the waste gas duct (46, 104, 108) and/or the tube, which do not permit the admission of any gas into the cavity (42, 102, 116) as a result of displacement of the movable limb (16, 18, 88, 92) and enlargement of the cavity (42, 102, 116), or the escape of gas from the cavity (42, 102, 116) via the waste gas duct (46, 104, 108) upon diminution of the cavity (42, 102, 116).

2. Handling device (10, 80) according to claim 1, **characterised in that** the sealing means consists of a seal (14, 112, 114) which is positioned on the carrier member and functions as a shut-off valve.

3. Handling device (60) according the claim 1, **characterised in that** the sealing means (62) consists of a small slot (64) between the carrier member (12) and the surface of the section of the movable limb (16, 18) which can be led out of the carrier member, whereby the slot (64) offers a relatively high resistance to the flow of gas.

4. Handling device (10, 60, 80) according to claim 1, 2 or 3, **characterised in that** the blocking means comprise a check valve (48, 66, 106, 110), and more particularly a non-return valve (48, 106, 110).

5. Handling device (60) according to any one of the preceding claims, **characterised in that** the blocking means (66) are operated by switching means (70) in dependence on the motion of the movable limb (16,18) and/or of the drive unit (24).

6. Handling device (10, 60) according to any one of the preceding claims, **characterised in that** the drive unit (24) is coupled to the movable limb (16, 18) by means of gearing (29) in a gearbox cavity (50).

7. Handling device (10, 60) according to claim 6, **characterised in that** a transfer conduit (52, 46) is provided between the cavity (42) and the gearbox cavity (50) and/or between the waste gas duct (46) and the gearbox cavity (50).

8. Handling device (10, 60) according to claim 6 or 7, **characterised in that** the gearing is helical gearing or a cuneiform hook-type transmission (22).

9. Handling device (10, 60, 80) according to any one of the preceding claims, **characterised in that** the drive unit comprises a piston (28, 68) which is unilaterally gas actuated and is connected with the movable limb (16, 18, 88) by means of a piston rod (30, 88) that is axially adjustable within a cylinder space (26, 102), whereby the cavity (42, 102) diminishes in size as a result of the gas actuation.

10. Handling device (1.0, 60, 80) according to claim 9, **characterised in that** the side of the piston (28, 66) that is not acted upon by gas can be pressurised by a spring element (36, 98);

11. Handling device (10, 60, 80) according to any one of the preceding claims, **characterised in that** the exhaust duct (46, 104, 108) is coupled to a low-pressure vacuum generator.

12. Handling device (10, 60, 80) according to claim 11, **characterised in that** the low-pressure vacuum generator acts upon the cavity (42, 102, 116) with underpressure once the cavity (42, 102, 116) has diminished in size as a result of the displacement of the movable limb (16, 18, 88, 92).

13. Handling device (10, 60) according to any one of the preceding claims, **characterised in that** the handling device is a gripper or clamping device and particularly a two-finger or multi-finger parallel gripper, or a three- or multi-finger concentric gripper, whereby the basic jaws (16, 18) of the gripper or clamping device constitute the movable limb.

14. Handling device (80) according to claims 1 to 12, **characterised in that** the handling device is a linear drive unit, whereby the piston rods (88) and/or guide rods (92) of the linear drive unit constitute the movable limb.

15. Handling device (10, 60, 80) according to any one of the preceding claims, **characterised in that** a control unit (70) operates the blocking means (66) as a function of the motion of the movable limb (16, 18, 88, 92) and/or the drive unit (24) in such a manner that the blocking means (66) are open when the cavity (42, 102, 116) is diminished because of motion of the movable limb (16, 18, 88, 92), and closed when the cavity (42, 102, 116) is enlarged.

16. Method according to claim 15, **characterised in that** the low-pressure vacuum generator is operated by means of the control unit (70) and the cavity (42, 102, 116) is subjected to underpressure when the cavity (42, 102, 116) is minimised because of the displacement of the movable limb (16, 18, 88, 92).

## Revendications

1. Dispositif de manipulation (10, 60, 80) en particulier pour utilisation dans des salles blanches, équipé d'un corps de base (12, 82) pourvu d'un dégagement (20, 84, 94) pour le positionnement d'au moins un bras mobile (16, 18, 88, 92) monté sur le corps de base (12, 82), avec un dispositif d'entraînement (24, 26, 28, 84, 86) monté sur le corps de base (12, 82), le bras mobile (16,18, 88, 92) pouvant s'écarter au moins partiellement du corps de base (12, 82) à l'aide du dispositif d'entraînement (24, 26, 28, 84, 86), l'écartement du bras mobile (16, 18, 88, 92) modifiant le volume de l'espace creux (42, 102, 116) contenant un volume de gaz utilisable par le corps de base (12, 82), **caractérisé en ce que** sont prévus des moyens d'étanchéité (44, 64, 112, 114) entre le corps de base (12, 82) et la surface de la section du bras mobile (16, 18, 88, 92) pouvant s'écarter du corps de base (12, 82), qui, à la suite d'un écartement du bras mobile (16, 18, 88, 92), laissent pénétrer du gaz en provenance de la salle blanche dans l'espace creux (42, 102, 116) lorsque l'espace creux (42, 102, 116) augmente et ne laissent pénétrer aucun gaz provenant de l'espace creux (42, 102, 116) dans la salle blanche lorsque l'espace creux (42, 102, 116) diminue et que l'espace creux (42, 102, 116) est relié à la partie extérieure du corps de base par l'intermédiaire d'un canal d'évacuation du gaz (46, 104, 108), ce canal d'évacuation du gaz (46, 104, 108) pouvant être relié à une conduite d'évacuation de l'espace creux et des moyens de fermeture (48, 66, 106, 110) étant prévus pour la régulation de la résistance de l'écoulement dans le canal d'évacuation du gaz (46, 104, 108) et/ou de la conduite, qui, du fait de l'écartement du bras mobile (16, 18, 88, 92), ne laissent pénétrer, par l'intermédiaire du canal d'évacuation du gaz (46, 104, 108), aucun gaz dans l'espace creux (42, 102, 116) lorsque l'espace creux (42, 102, 116) augmente, et laissent sortir le gaz de l'espace creux (42, 102, 116) lorsque l'espace creux (42, 102, 116) diminue, par l'intermédiaire du canal d'évacuation du gaz (46, 104, 108) ou par le biais de la conduite.

2. Dispositif de manipulation (10, 80) selon la revendication 1, **caractérisé en ce que** les moyens d'étanchéité comportent un joint (44, 112, 114), de type clapet, disposé au niveau du corps de base.

3. Dispositif de manipulation (60) selon la revendication 1, **caractérisé en ce que** les moyens d'étanchéité (62) comportent une petite fente (64) entre le corps de base (12) et la surface de la section du bras mobile (16, 18) pouvant s'écarter du corps de base, la fente (64) formant une résistance à l'écoulement relativement élevée pour le gaz.

4. Dispositif de manipulation (10, 60, 80) selon la revendication 1, 2 ou 3, **caractérisé en ce que** les moyens de fermeture comprennent une soupape de verrouillage (48, 66, 106, 110). en particulier une soupape anti-retour (48, 106, 110).

5. Dispositif de manipulation (60) selon l'une quelconque des revendications précédentes, **caractérisé en ce que** les moyens de fermeture. (66) sont commutés par l'intermédiaire du dispositif de commutation (70) en fonction du mouvement du bras mobile (16, 18) et/ou du dispositif d'entraînement (24).

6. Dispositif de manipulation (10, 60) selon l'une quelconque des revendications précédentes, **caractérisé en ce que** le dispositif d'entraînement (24) est couplé au bras mobile (16, 18) par l'intermédiaire d'un mécanisme (22) disposé dans un espace creux du mécanisme (50).

7. Dispositif de manipulation (10, 60) selon la revendication B, **caractérisé en ce qu'**il est prévu un canal de liaison (52, 46) entre l'espace creux (42) et l'espace creux du mécanisme (50) et/ou entre le canal d'évacuation du gaz (46) et l'espace creux du mécanisme (50).

8. Dispositif de manipulation (10, 60) selon la revendication 6 ou 7, **caractérisé en ce que** le mécanisme est un mécanisme d'accrochage par clavette ou à traction oblique.

9. Dispositif de manipulation (10, 60, 80) selon l'une quelconque des revendications précédentes, **caractérisé en ce que** le dispositif d'entraînement comprend un piston (28, 86) couplé au bras mobile (16, 18, 88) par l'intermédiaire d'une tige de piston (30, 88), pouvant se déplacer en direction axiale dans un espace du cylindre (26, 102) et admettre du gaz d'un côté, sachant que l'espace creux (42, 102) diminue à la suite de l'admission du gaz.

10. Dispositif de manipulation (10, 60, 80) selon la revendication 9, **caractérisé en ce que** le côté du piston (28, 86) ne pouvant admettre du gaz peut être mis sous pression par l'intermédiaire d'un élément de ressort (36,98).

11. Dispositif de manipulation (10, 60, 80) selon l'une quelconque des revendications précédentes, **caractérisé en ce que** le canal d'évacuation du gaz (46, 104, 108) est couplé à un générateur de vide.

12. Dispositif de manipulation (10, 60, 80) selon la revendication 11, **caractérisé en ce que** le générateur de vide crée du vide dans l'espace creux (42, 102, 116), lorsque l'espace creux (42, 102, 116) diminue du fait de l'écartement du bras mobile (16, 18, 88, 92).

13. Dispositif de manipulation (10, 60) selon l'une quelconque des revendications précédentes, **caractérisé en ce que** le dispositif de manipulation est un dispositif de serrage ou de préhension, en particulier, une pince à deux doigts parallèles ou une pince centrique à trois ou plusieurs doigts, où des mâchoires de base (16, 18) du dispositif de serrage ou de préhension forment le bras mobile.

14. Dispositif de manipulation (80) selon l'une quelconque des revendications 1 à 12, caractère en ce que le dispositif de manipulation est un dispositif d'entraînement linéaire, des tiges de piston (88) et/ou des tiges de guidage (92) du dispositif d'entraînement linéaire formant le bras mobile.

15. Procédé destiné au fonctionnement d'un dispositif de manipulation (10, 60, 80) selon l'une quelconque des revendications précédentes, **caractérisé en ce qu'**un organe de commande (70) du dispositif de manipulation commute les moyens de fermeture (66) en fonction du mouvement du bras mobile (16, 18, 88, 92) et/ou du dispositif d'entraînement (24) de telle sorte que les moyens de fermeture (66) sont ouverts lorsque, à la suite à l'écartement du bras mobile (16, 18, 88, 92), l'espace creux (42, 102, 116), diminue et sont fermés, lorsque l'espace creux (42, 102, 116) augmente.

16. Procédé destiné au fonctionnement d'un dispositif de manipulation (10, 60, 80) selon la revendication 15, **caractérisé en ce que** le générateur de vide est actionné par l'intermédiaire de l'organe de. commande (70) et crée ensuite du vide dans l'espace creux (42, 102, 116) lorsque, à la suite de l'écartement du bras mobile (16, 18, 88, 92), l'espace creux (42, 102, 116) diminue.
